# EUROPÄISCHE PATENTANMELDUNG

(11) **EP 2 796 891 A1**
(43) Veröffentlichungstag der Anmeldung: **29.10.2014**
(21) Anmeldenummer: 14160449.6
(22) Anmeldetag: 18.03.2014
(51) Int. Cl.: G01S 7/497, G01C 21/12, G01S 17/06, G01S 17/42, G01S 7/481

(54) **Laserscanner für die Navigation eines Fahrzeugs**

(30) Priorität: 26.04.2013 DE 102013104239
(71) Anmelder: SICK AG, 79183 Waldkirch (DE)
(72) Erfinder: Neuenfeldt, Guido, 23795 Negernbötel (DE); Manz, Christian, 22359 Hamburg (DE)
(74) Vertreter: Ludewigt, Christoph

(57) **Zusammenfassung**

Die Erfindung betrifft einen Laserscanner zur Navigation eines Fahrzeugs. Dazu weist der Laserscanner einen Lichtsender zum Aussenden eines Sendelichtstrahls, eine drehbaren Ablenkeinheit zur periodischen Ablenkung des Sendelichtstrahls in den Sichtbereich, einen Lichtempfänger zum Erzeugen eines Empfangssignals aus dem von Landmarken in dem Sichtbereich remittierten Lichtstrahl, ein Gehäuse, eine Winkelmesseinheit zur Bestimmung der Winkelposition der Ablenkeinheit relativ zum Gehäuse, einen Drehratensensor zur Bestimmung von Drehbewegungen des Scanners relativ zu seiner Umgebung sowie eine Auswertungseinheit auf, die dafür ausgebildet ist, anhand des Empfangssignals Messwerte zu erzeugen, die angeben, ob und in welcher Richtung wenigstens eine Landmarke erfasst ist. Aus den Messwerten errechnet die Auswerteeinheit Eigenpositions- und Navigationsdaten, wobei eine Korrektureinheit vorgesehen ist, welche dafür ausgebildet ist, Drehungen des Scanners bezüglich der Drehachse der Ablenkeinheit zu bestimmen und den Einfluss der Drehungen auf die Messwerte zu kompensieren. Um einen Laserscanner bereit zu stellen, dessen Positionsbestimmung unter Einfluss von beliebigen Drehbewegungen und linearen Bewegungen verbessert ist, wird vorgeschlagen, dass die Korrektureinheit dazu ausgebildet, zusätzlich Orientierungsänderungen des Laserscanners bezüglich wenigstens einer Achse, die in einem Winkel ungleich 0° zur Drehachse der Ablenkeinheit liegt, mit den Daten des Drehratensensors zu bestimmen, wobei die Korrektureinheit zusätzlich einen Linearbewegungssensor aufweist zur Erfassung von linearen Geschwindigkeiten und Beschleunigungen, um schließlich den Einfluss der so ermittelten zusätzlichen rotativen und linearen Bewegungsdaten auf die Messwerte zu kompensieren.

## Beschreibung

Die Erfindung betrifft einen Laserscanner für die Navigation eines Fahrzeugs.

In einem Laserscanner überstreicht ein von einem Laser erzeugter Lichtstrahl mit Hilfe einer Ablenkeinheit periodisch einen Sichtbereich. Das Licht wird an Objekten in dem Sichtbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird. Mit den Winkel- und Entfernungsangaben ist der Ort eines Objektes in dem Sichtbereich in zweidimensionalen Polarko-ordinaten erfasst. Aus Ortsbestimmungen bekannter Objekte, z. B. definierter Landmarken, kann somit die Position des Laserscanners berechnet werden und mit diesen Daten eine Navigation, z. B. eines mit dem Laserscanner ausgerüsteten Fahrzeugs, erfolgen.

Befinden sich drei oder mehr Landmarken im Sichtbereich des Laserscanners, kann die Navigation auch ohne Entfernungsbestimmung zu den einzelnen Landmarken allein aus den gemessenen Winkeln erfolgen.

Für eine genaue Navigation ist eine definierte Winkelauflösung erforderlich. Insbesondere wenn der Laserscanner auf einem Fahrzeug montiert ist, kommt es unter anderem zu Drehbewegungen des Laserscanners. Solche Bewegungen kommen beispielsweise bei Transportsystemen mit omnidirektionalem Antrieb vor, bei denen spezielle Radkonstruktionen die Möglichkeit schaffen, auf der Stelle zu drehen und sich aus der Istbewegung in jede Richtung bewegen zu können. Die durch die Drehbewegung der Ablenkeinheit vorgegebene Winkelauflösung überlagert sich hier mit der äußeren Drehbewegung. Da sich die Aufnahme eines Scans (von 360°) zeitlich ausdehnt, beinhalten die vom Scanner erfassten Messdaten bei Bewegung des Scanners im Raum eine Bildverzerrung. Dienen die Scandaten messtechnischen Zwecken, stellt die sogenannte "Verzerrung" einen unerwünschten Fehler dar.

Aus der DE 20 2010 007 088 U1 ist ein Laserscanner zur Navigation eines Fahrzeugs bekannt, mit einem Lichtsender, einer drehbaren Ablenkeinheit zur periodischen Ablenkung des Sendelichts, einem Lichtempfänger, einem Gehäuse, einer Winkelmesseinheit zur Erfassung der Winkelposition der Ablenkeinheit und einer Auswertungseinheit um anhand der Empfangssignale Positionen von Reflektormarken zu bestimmen und damit eine Navigation zu ermöglichen.

Die DE 10 2011 053 212 B3, die zwar keine Laserscanner für die Navigation beschreibt, sondern einen Laserscanner für die Sicherheitstechnik, zeigt eine Möglichkeit auf, wie Drehbewegungen, die die gleiche Drehachse haben wie die Ablenkeinheit, kompensiert werden können. Dazu wird die Drehbewegung mit einem Drehratensensor erfasst und die Überlagerung der beiden Drehbewegungen bei der Auswertung berücksichtigt.

Bei der Navigation eines Fahrzeugs treten jedoch eine Vielzahl von Bewegungen auf und nicht nur Drehbewegungen um die Achse der Ablenkeinheit. Insbesondere treten auch starke lineare Beschleunigungen (Bremsen, Anfahren) auf, die einen Einfluss auf die Genauigkeit der Positionsbestimmung haben können, wenn sich nämlich die Rotation der Ablenkeinheit mit der linearen Bewegung oder Beschleunigung in einem Winkelbereich überlagert.

Fehler in der Bestimmung der Landmarken verschlechtern das Positionsergebnis und können im Extremfall zur vorübergehenden Unfähigkeit führen, die aktuelle Position zu bestimmen. Speziell hohe Drehraten oder starke Beschleunigungen oder Verzögerungen stellen hierbei bei dynamischer Fahrzeugbewegung ein Problem dar.

Ausgehend von diesem Stand der Technik ist es Aufgabe der Erfindung, einen Laserscanner bereit zu stellen, dessen Positionsbestimmung unter Einfluss von beliebigen Drehbewegungen und linearen Bewegungen verbessert ist.

Diese Aufgabe wird durch einen Laserscanner mit den Merkmalen des Anspruchs 1 gelöst.

Der erfindungsgemäße Laserscanner dient zur Navigation eines Fahrzeugs und erfasst Reflexionen aus seinem Sichtbereich. Dazu weist der Laserscanner einen Lichtsender zum Aussenden eines Sendelichtstrahls, eine drehbaren Ablenkeinheit zur periodischen Ablenkung des Sendelichtstrahls in den Sichtbereich, einen Lichtempfänger zum Erzeugen eines Empfangssignals aus dem von Landmarken in dem Sichtbereich remittierten Lichtstrahl, ein Gehäuse, eine Winkelmesseinheit zur Bestimmung der Winkelposition der Ablenkeinheit relativ zum Gehäuse, einen Drehratensensor zur Bestimmung von Drehbewegungen des Scanners relativ zu seiner Umgebung sowie eine Auswertungseinheit auf, die dafür ausgebildet ist, anhand des Empfangssignals Messwerte zu erzeugen, die angeben, ob und in welcher Richtung wenigstens eine Landmarke erfasst ist. Aus den Messwerten errechnet die Auswerteeinheit Eigenpositions-und Navigationsdaten, wobei eine Korrektureinheit vorgesehen ist, welche dafür ausgebildet ist, Drehungen des Scanners bezüglich der Drehachse der Ablenkeinheit zu bestimmen und den Einfluss der Drehungen auf die Messwerte zu kompensieren. Erfindungsgemäß ist die Korrektureinheit dazu ausgebildet, zusätzlich Orientierungsänderungen des Laserscanners bezüglich wenigstens einer Achse, die in einem Winkel ungleich 0° zur Drehachse der Ablenkeinheit liegt, mit den Daten des Drehratensensors zu bestimmen. Weiter weist die Korrektureinheit zusätzlich einen Linearbewegungssensor auf zur Erfassung von linearen Geschwindigkeiten und Beschleunigungen, um schließlich den Einfluss der so ermittelten zusätzlichen rotativen und linearen Bewegungsdaten auf die Messwerte zu kompensieren.

Damit können nicht nur die Drehbewegungen, deren Drehachsen mit der Drehachse der Ablenkeinheit zusammenfallen, erfasst werden, sondern jedwede Drehung. Auch werden lineare Beschleunigungen und Geschwindigkeiten erfasst und berücksichtigt. Lineare Bewegungen wirken sich nämlich auch auf die Messdaten aus, wenn z. B. die lineare Bewegung tangential zur Drehung der Ablenkeinheit erfolgt. Das ist in einem Fahrzeug praktisch immer der Fall, denn die Drehachse der Ablenkeinheit ist in der Regel vertikal und die linearen Bewegungen horizontal.

Damit ist ein kompakter Navigationssensor erhalten, der dynamische Bewegungen des Trägerfahrzeugs eigenständig erkennt, korrigiert und somit die Bewegungen deutlich besser toleriert.

Vorteilhafterweise sind der Drehratensensor und der Bewegungssensor als 3-Achs-MEMS-Intertialsensoren ausgebildet. MEMS-Inertialsensoren sind z .B. aus dem Automobilbau bekannt, sehr kostengünstig zu erhalten und können in den Laserscanner gut integriert werden.

In Weiterbildung der Erfindung werden die Eigenpositions- und Navigationsdaten zyklisch neu ermittelt und bevorzugt durch Mittelung über einen Zyklus ermittelt. Dadurch ist gewährleistet, dass die Drehungen und linearen Bewegungen laufend berücksichtigt werden und die Navigation mit den aktuellsten Daten und entsprechend genauer erfolgt.

In Weiterbildung der Erfindung ist die Auswerteeinheit dafür ausgebildet, einen Kalman-Filter auf die Messwerte anzuwenden und die Daten des Drehratensensors und/oder des Bewegungssensors zur dynamischen Parametersatzanpassung des Kalman-Filters zu verwenden.

Die Auswertungseinheit ist bevorzugt dafür ausgebildet, die Entfernung zu einer Landmarke aus der Lichtlaufzeit zwischen Aussenden des Sendelichtstrahls und Empfangen des remittierten Lichtstrahls zu bestimmen, so dass die Messwerte jeweils einen Objektabstand und eine Richtung umfassen. Der Laserscanner wird damit zu einem entfernungsmessenden Laserscanner, und jeder Messwert umfasst eine Richtung und einen Abstand, somit vollständige zweidimensionale Polarkoordinaten. Damit kann eine bessere Positionsbestimmung und damit Navigation erfolgen.

In bestimmten Situationen kann es vorkommen, dass der Laserscanner keine Landmarken "sieht", beispielsweise während einer Tunnelfahrt. Dann ist in Weiterbildung der Erfindung die Auswertungseinheit dafür ausgebildet, eine bekannte Position nur anhand der Bewegungsdaten des Drehratensensors und des Bewegungssensors zu verfolgen. Während der Tunnelfahrt stützt sich die Navigation dann nur auf diese Daten.

Insgesamt ist damit ein Laserscanner für die automatische Navigation geschaffen, der robuster gegenüber Störeinflüssen ist und zuverlässigere Messwerte liefert.

Die Erfindung wird nachstehend auch hinsichtlich weiterer Merkmale und Vorteile beispielhaft anhand von Ausführungsformen und unter Bezug auf die beigefügte Zeichnung näher erläutert. In der Zeichnung zeigen:
- Fig. 1: eine schematische Schnittdarstellung eines Laserscanners; und
- Fig. 2: eine Draufsicht auf ein Fahrzeug mit darauf montiertem Laserscanner gemäß Fig. 1.

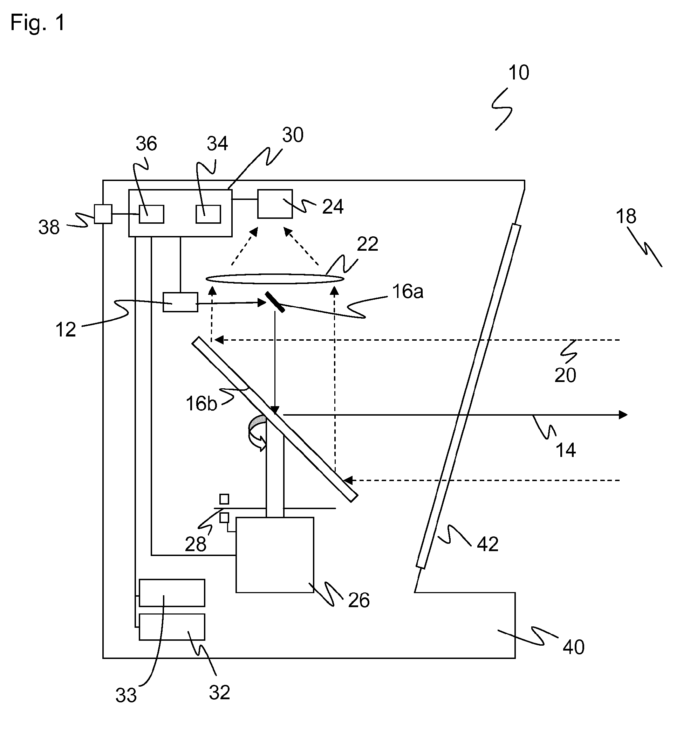

Fig. 1 zeigt eine schematische Schnittdarstellung durch einen erfindungsgemäßen Laserscanner 10. Ein von einem Lichtsender 12, beispielsweise einem Laser, erzeugter Lichtstrahl 14, der einzelne Lichtimpulse aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Sicherheitslaserscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst, der beispielsweise eine Codescheibe 28a umfasst, die von einer Gabellichtschranke 28b abgetastet wird. Der von dem Lichtsender 12 erzeugte Lichtstrahl 14 überstreicht somit den durch die Rotationsbewegung erzeugten Überwachungsbereich 18. Wird ein von dem Lichtempfänger 24 empfangenes reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

Anstelle des Drehspiegels könnte auch eine komplette sich drehende Einheit mit integriertem Sender und Empfänger und gegebenenfalls einem Spiegel, vorgesehen sein, wie z. B. in EP 2 237 064 A1 offenbart.

Zusätzlich wird die Laufzeit der einzelnen Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Laserscanner 10 geschlossen. Diese Auswertung erfolgt in einer Auswertungseinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in dem Überwachungsbereich 18 zur Verfügung.

Der erfindungsgemäße Laserscanner dient zur automatischen Navigation eines führerlosen Fahrzeugs, so dass die hier interessierenden Objekte Landmarken sind. Im Folgenden werden die Begriffe "Objekt" und "Landmarke" synonym gebraucht. Eine Navigation erfolgt, indem der auf dem Fahrzeug montierte Laserscanner anhand der Landmarken, die er in seinem Sichtfeld erkennt, seine Position und Ausrichtung bestimmt und diese Daten als Eigenpositions- und Navigationsdaten an eine Fahrzeugsteuereinheit über einen Ausgang 38 gibt. Die Fahrzeugsteuereinheit berechnet daraus die Beschleunigung, Verzögerung und Lenkwinkel.

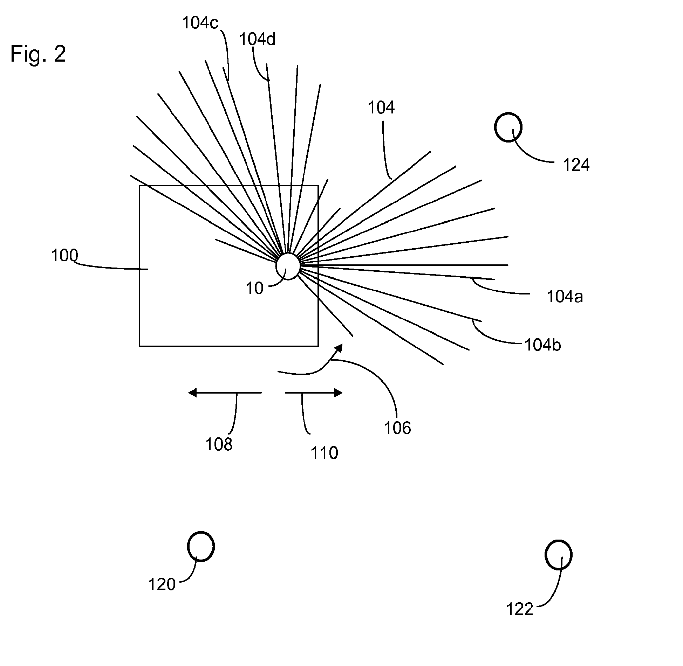

Wie weiter unten unter Bezugnahme auf die Fig. 2 näher erläutert, kann die Winkelauflösung des Laserscanners 10 durch Eigenbewegungen, wie Eigendrehungen und durch lineare Bewegungen, also Geschwindigkeit und Beschleunigungen bzw. Verzögerungen, beeinflusst werden. Deshalb weist der Laserscanner 10 einen Drehratensensor 32 und einen Bewegungssensor 33, der die linearen Bewegungen erfasst, auf. Der Drehratensensor 32 und der Bewegungssensor 33 sind als 3-Achs-MEMS Inertialsensoren ausgebildet und am Gehäuse 40 festgelegt. Der Drehratensensor 32 überwacht Rotationen des Laserscanners 10 um Rotationsachsen aller Orientierungen und liefert Informationen über die Drehrichtung und Drehgeschwindigkeit des Laserscanners 10. Diese Informationen werden in einer Korrektureinheit 34 weiterverarbeitet, um Veränderungen der Winkelauflösung des Laserscanners 10 zu bestimmen und zu kompensieren.

Alle genannten Funktionskomponenten sind in einem Gehäuse 40 angeordnet, das im Bereich des Lichtaustritts und Lichteintritts eine Frontscheibe 42 aufweist. Die Funktionalität der Auswertungseinheit 30 mit der Korrektureinheit 34 kann alternativ auch ganz oder teilweise in einer übergeordneten Steuerung implementiert sein.

Fig. 2 zeigt eine schematische Draufsicht auf ein Fahrzeug 100, dessen Navigation mit Hilfe eines Laserscanners 10 erfolgt. Weiterhin sind schematisch einzelne Abtastungen 104 des Laserscanners 10 eingezeichnet, mit denen der Laserscanner 10 seine Umgebung nach den Landmarken 120, 122 und 124 abtastet. Dabei wird der an sich regelmäßige Winkelabstand zwischen zwei Abtastungen 104 von beispielsweise 0,5° durch Bewegungen des Fahrzeugs 100 gestört. Eine solche Störung kann durch eine mit einem Pfeil 106 angedeutete Fahrtrichtungsänderung mit einer damit verbundenen Eigendrehung des Fahrzeugs 100 gestört werden, so dass einzelne Abtastungen 104a und 104b einen größeren Winkelschritt bilden, wenn sich die Lichtablenkeinheit 16b kontinuierlich mit konstanter Rotationsgeschwindigkeit dreht. Die Positionsbestimmung, in die der gemessene Winkel einfließt, der dann nicht mit dem tatsächlichen Winkel übereinstimmt, wird auf diese Weise ungenau. Dadurch ist es möglich, dass die Navigation mit einem Fehler behaftet ist.

Die Korrektureinheit 34 nutzt nun die Dreh- und Orientierungsinformationen des Drehratensensors 32, um zu beurteilen, ob eine Eigenbewegung des Laserscanners 10 dessen Navigationsdaten beeinträchtigt und berechnet die korrekten Eigenpositions- und Navigationsdaten und kompensiert den Einfluss der Eigenbewegung auf die Messwerte.

Gleiches gilt für den Einfluss einer linearen Bewegung, beispielsweise einer Verzögerung (Bremsung) in Richtung des Pfeils 108, wenn das Fahrzeug 100 in Richtung 110 fährt und dadurch zwischen zwei Abtastungen 104c und 104d der gemessene und tatsächliche Winkel unterschiedlich sind.

Dabei werden einerseits die Winkelstellung der Lichtablenkeinheit 16a-b und die über die Drehrate bekannte überlagerte Orientierungsänderung und andererseits die lineare Verschiebung des Laserscanners 10 gegenüber seiner Umgebung in der Korrektureinheit 34 miteinander verrechnet, um die tatsächliche Position im Raum und die Ausrichtung gegenüber der Umgebung des Fahrzeugs 100 zu bestimmen.

Häufig sind erfindungsgemäße Laserscanner zur Navigation am höchsten Punkt eines Fahrzeugs angeordnet, um eine gutes Rundumsichtfeld zu haben und die Landmarken problemlos sehen zu können. Es kann dann bei Fahrzeugen wie beispielsweise Kommissionierfahrzeuge oder Gabelstapler zu dem Problem kommen, dass der Laserscanner typischerweise in zirka 2,5m Höhe über dem Boden montiert ist und deshalb aufgrund von Bodenunebenheiten und Lastwechsel auf der Hubgabel sich die Position gegenüber dem Fahrzeugreferenzpunkt um einige Millimeter ändert. Durch Bestimmung der Neigung bzw. der Neigungsänderung mittels der Inertialsensoren 32 und 33 kann diese Differenz zum Fahrzeugreferenzpunkt korrigiert werden auf Basis im Laserscanner gespeicherter Parameter zur Fahrzeuggeometrie.

Ein ähnliches Problem tritt auf, wenn der Laserscanner auf der Hubgabel montiert ist und auf der Hubgabel Last abgelegt wird und daher eine Neigung oder Kippung der Hubgabel auftritt und somit eine entsprechende Differenz zwischen tatsächlicher Position des Laserscanners und der momentan abgespeicherten entsteht. Wenn der Laserscanner aber zyklisch die aktuelle Hubgabelhöhe über dem Boden von dem Fahrzeug erhält, kann die Korrektureinheit die Differenz berücksichtigen und so die eigentlich relevante Hubgabelposition korrigieren, um den korrekten Übergabeort der Last, z. B. eine Palette, zu bestimmen.

In Weiterbildung kann eine sogenannte "elektronische Libelle" zur Nivellierung bei Sensormontage vorgesehen sein, um die korrekte Nivellierung des Sensors am Mast bei der Erstmontage zu ermitteln und auch um im laufenden Betrieb zu überprüfen.

## Patentansprüche

1. Laserscanner (10) zur Erfassung von Reflexionen aus einem Sichtbereich (18) zur Navigation eines Fahrzeugs (100), mit einem Lichtsender (12) zum Aussenden eines Sendelichtstrahls (14), einer drehbaren Ablenkeinheit (16) zur periodischen Ablenkung des Sendelichtstrahls (14) in den Sichtbereich (18), einem Lichtempfänger (24) zum Erzeugen eines Empfangssignals aus dem von Landmarken (120, 122, 124) in dem Sichtbereich (18) remittierten Lichtstrahl (20), einem Gehäuse (40), einer Winkelmesseinheit (28) zur Bestimmung der Winkelposition der Ablenkeinheit (16) relativ zum Gehäuse (40), einem Drehratensensor (32) zur Bestimmung von Drehbewegungen des Scanners (10) relativ zu seiner Umgebung sowie einer Auswertungseinheit (30), die dafür ausgebildet ist, anhand des Empfangssignals Messwerte zu erzeugen, die angeben, ob und in welcher Richtung wenigstens eine Landmarke (120, 122, 124) erfasst ist und daraus Eigenpositions- und Navigationsdaten errechnet, wobei eine Korrektureinheit (34) vorgesehen ist, welche dafür ausgebildet ist, Drehungen des Scanners (10) bezüglich der Drehachse der Ablenkeinheit (16) mit einem Drehratensensor (32) zu bestimmen und den Einfluss der Drehungen auf die Messwerte zu kompensieren, und die Korrektureinheit (34) zusätzlich Orientierungsänderungen des Laserscanners (10) bezüglich wenigstens einer Achse, die in einem Winkel ungleich 0° zur Drehachse der Ablenkeinheit liegt, mit den Daten des Drehratensensors (32) bestimmen kann und die Korrektureinheit (34) zusätzlich einen Linearbewegungssensor (33) aufweist zur Erfassung von linearen Geschwindigkeiten und Beschleunigungen und die Korrektureinheit (34) den Einfluss der zusätzlichen rotativen und linearen Bewegungsdaten auf die Messwerte kompensiert.

2. Laserscanner nach Anspruch 1, **dadurch gekennzeichnet, dass** der Drehratensensor und der Bewegungssensor als 3-Achs-MEMS-Intertialsensoren ausgebildet sind.

3. Laserscanner nach Anspruch 1 oder 2, **dadurch gekennzeichnet, dass** die Eigenpositions- und Navigationsdaten zyklisch neu ermittelt werden.

4. Laserscanner nach Anspruch 3, **dadurch gekennzeichnet, dass** die Eigenpositions- und Navigationsdaten durch Mittelung über einen Zyklus ermittelt werden.

5. Laserscanner nach einem der vorhergehenden Ansprüche, **dadurch gekennzeichnet, dass** die Auswerteeinheit dafür ausgebildet ist, einen Kalman-Filter auf die Messwerte anzuwenden und die Daten des Drehratensensors und/oder des Bewegungssensors zur dynamischen Parametersatzanpassung des Kalman-Filters zu verwenden.

6. Laserscanner nach einem der vorhergehenden Ansprüche, **dadurch gekennzeichnet, dass** die Auswertungseinheit dafür ausgebildet ist, die Entfernung zu einer angetasteten Landmarke aus der Lichtlaufzeit zwischen Aussenden des Sendelichtstrahls und Empfangen des remittierten Lichtstrahls zu bestimmen, so dass die Messwerte jeweils einen Landmarkenabstand und eine Richtung umfassen.

7. Laserscanner nach einem der vorhergehenden Ansprüche, **dadurch gekennzeichnet, dass** die Auswertungseinheit dafür ausgebildet ist, eine bekannte Position nur anhand der Bewegungsdaten des Drehratensensors und des Bewegungssensors zu verfolgen.
